(19) Europäisches Patentamt
European Patent Office
Office européen des brevets

(11) **EP 1 747 103 B1**

(12) **FASCICULE DE BREVET EUROPEEN**

(45) Date de publication et mention
de la délivrance du brevet:
**06.05.2009 Bulletin 2009/19**

(21) Numéro de dépôt: **05748808.2**

(22) Date de dépôt: **11.05.2005**

(51) Int Cl.:
*B60C 15/00* [(2006.01)]          *B60C 9/00* [(2006.01)]
*D07B 1/06* [(2006.01)]

(86) Numéro de dépôt international:
**PCT/EP2005/005085**

(87) Numéro de publication internationale:
**WO 2005/113259 (01.12.2005 Gazette 2005/48)**

(54) **PNEUMATIQUE**

REIFEN

TYRE

(84) Etats contractants désignés:
**AT BE BG CH CY CZ DE DK EE ES FI FR GB GR
HU IE IS IT LI LT LU MC NL PL PT RO SE SI SK TR**

(30) Priorité: **12.05.2004 FR 0405163**

(43) Date de publication de la demande:
**31.01.2007 Bulletin 2007/05**

(73) Titulaires:
• **Société de Technologie Michelin
63000 Clermont-Ferrand (FR)**
• **Michelin Recherche et Technique S.A.
1763 Granges-Paccot (CH)**

(72) Inventeurs:
• **ALVAREZ, Denis
F-63000 Clermont-Ferrand (FR)**
• **SIGNORET, Christian
F-63800 Cournon d'Auvergne (FR)**

(74) Mandataire: **Ribière, Joel
M.F.P. Michelin,
SGD/LG/PI - F35 - Ladoux
63040 Clermont-Ferrand Cedex 9 (FR)**

(56) Documents cités:
**EP-A- 0 269 036          EP-A- 0 744 490
EP-A- 0 751 015          US-A- 3 996 733**

**Description**

La présente invention est relative aux pneumatiques ainsi qu'aux composites métal/ caoutchouc utilisables pour la fabrication des pneumatiques, en particulier de leurs bourrelets permettant de fixer ces pneumatiques sur une jante de roue de véhicule.

Le document de brevet EP-A-582 196 a décrit le premier un pneumatique comportant un sommet surmontée d'une bande de roulement, une armature de sommet, deux flancs et deux bourrelets, une armature de carcasse passant dans les deux flancs et ancrée grâce à des moyens d'ancrage dans les bourrelets, dans lequel l'armature de carcasse comprend au moins un alignement circonférentiel de renforts (dits radiaux) orientés radialement, disposés de façon adjacente et pratiquement parallèles les uns aux autres, alignés circonférentiellement en au moins un alignement circonférentiel depuis les bourrelets vers les flancs, et dans lequel les moyens d'ancrage de ces renforts radiaux comprennent au moins un renfort (dit d'ancrage) orienté circonférentiellement, bordant axialement lesdits alignements circonférentiels desdits renforts radiaux et coopérant avec une portion adjacente de l'armature de carcasse par l'intermédiaire d'une composition de caoutchouc appropriée (dite gomme d'ancrage), à dureté élevée, en contact avec le renfort d'ancrage et les tronçons adjacents des premiers renforts radiaux, et assurant la transmission des efforts entre les renforts radiaux et les renforts d'ancrage.

Pour la description détaillée de tels pneumatiques dits « sans tringle » car dépourvus de tringle conventionnelle massive, de diamètre relativement élevé, autour de laquelle s'enroule usuellement l'armature de carcasse, on pourra se reporter également, à titre d'exemples, aux documents de brevet EP-A-664 231, EP-A-664 232, EP-A-664 233 (ou US-A-5 660 656), WO-A-98/54006 ou WO-A-2004/009380.

Si cette nouvelle architecture de zone basse de pneumatique a certes donné d'excellents résultats, notamment en endurance, il a été cependant constaté que la forte rigidité des bourrelets pouvait entraîner des difficultés lors du montage et/ou démontage des pneumatiques, notamment lors d'opérations manuelles, ce problème étant particulièrement vrai pour des pneumatiques de grandes dimensions tels que par exemple des pneumatiques pour véhicules Poids-lourd.

On rappelle ici que le procédé de montage usuel d'un pneumatique "tubeless" sur une jante généralement monobloc et comportant une base creuse, consiste à faire passer une partie du premier bourrelet par-dessus le rebord de jante et à placer cette partie dans la base creuse, à faire passer alors le reste du bourrelet par-dessus le rebord grâce à une légère ovalisation du bourrelet correspondant du pneumatique, à répéter la même opération pour faire passer le second bourrelet par-dessus le rebord de la jante. Le montage est ensuite terminé par une étape finale de gonflage à une pression telle qu'elle assure la mise en place des bourrelets sur les sièges en appui sur les rebords de jante ; durant cette dernière étape les bourrelets peuvent franchir des *"humps"* qui forment un obstacle au passage desdits bourrelets jusqu'à leur siège respectif et préviennent ensuite les risques de déjantage.

Pour pallier ce problème de montabilité, on a proposé tout d'abord, selon l'enseignement du document de brevet EP-A-751 015 (ou US-A-5 702 548), l'emploi de câbles d'ancrage à allongement non-structural élevé, notamment des câbles à couches de construction (2+7) ou (3+8), ayant subi un traitement thermique spécifique. Ces câbles dits du type "grand-allongement" sont caractérisés, avant et après cuisson du pneumatique, par un allongement fonctionnel (somme de leur allongement élastique Ae et de leur allongement plastique Ap) particulièrement élevé, supérieur à 4%. Toutefois, un tel allongement est obtenu au prix d'un traitement thermique dit de recuit de restauration, conduit à basse température comprise entre 250°C et $Ac_1$ (température correspondant à une transformation de la structure cristalline de l'acier), qui présente l'inconvénient d'être relativement complexe et coûteux.

Pour pallier ce problème de montabilité, la demande de brevet EP-A-1 277 600 a certes proposé une autre solution, plus économique, consistant à utiliser à titre de gomme d'ancrage une composition de caoutchouc à rigidité réduite, présentant un module d'élasticité compris entre 10 et 20 MPa sous une déformation de 10%, et une résistance au fluage élevée grâce à une formulation spécifique. On constate toutefois aujourd'hui qu'une rigidité relativement faible de la gomme d'ancrage peut affecter quelque peu le comportement routier de véhicules équipés de tels pneumatiques, notamment sous des conditions de roulage sportives ; c'est notamment le cas sur des véhicules de tourisme de haut de gamme dont l'usager souhaite un très haut niveau de comportement routier, en toutes circonstances, sans compromis sur la sécurité, notamment sur les propriétés d'adhérence, ni sur la longévité des pneumatiques.

La demande EP-A-0 269 036, citée dans le rapport de recherche internationale, décrit des câbles M+N qui peuvent être du même type que ceux utilisés dans le pneumatique de l'invention, à pas $p_1$ et $p_2$ relativement courts. Mais ces câbles sont destinés à une ceinture (*"belt portion"*) de pneumatique, pas à une zone bourrelet (*"bead zone"*) de pneumatique.

Poursuivant ses recherches, la Demanderesse a trouvé une solution nouvelle qui permet d'améliorer les compromis existants en terme de montabilité des pneumatiques et de comportement routier, sans nécessiter de modification de l'architecture de la zone basse des pneumatiques sans tringle.

En conséquence, un premier objet de l'invention concerne un pneumatique comportant un sommet surmontée d'une bande de roulement, une armature de sommet, deux flancs et deux bourrelets, une armature de carcasse passant dans les deux flancs et ancrée grâce à des moyens d'ancrage dans les deux bourrelets, lesdits moyens d'ancrage comportant, dans au moins un bourrelet, un alignement circonférentiel d'au moins un renfort d'ancrage orienté circonférentiellement coopérant avec une composition de caoutchouc dite gomme d'ancrage, ce pneumatique étant **caractérisé en ce que** ledit renfort d'ancrage est un câble métallique à deux couches de construction M+N comportant une couche interne notée C1 de M fils de diamètre $d_1$ enroulés ensemble en hélice selon un pas $p_1$, cette couche C1 étant elle-même entourée d'une couche externe notée C2 de N fils de diamètre $d_2$ enroulés ensemble en hélice selon un pas $p_2$, ledit câble présentant en outre les caractéristiques suivantes ($d_1$, $d_2$, $p_1$ et $p_2$ en mm) :

- $2 \leq M \leq 4$
- $M+3 \leq N \leq M+7$
- $0,25 < d_1 < 0,40$ ;
- $0,25 < d_2 < 0,40$ ;
- $3,5 < p_1 < 7 < p_2 < 14$.

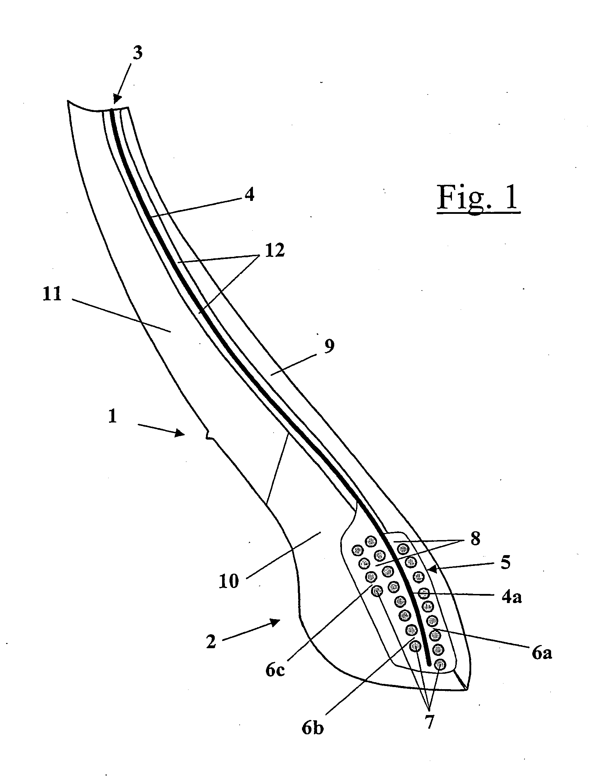

Grâce à ce câble d'ancrage spécifique, les bourrelets du pneumatique de l'invention sont avantageusement ovalisables, c'est-à-dire déformables dans leur plan, sous des efforts acceptables industriellement ; ces bourrelets peuvent être plus facilement gauchis, c'est-à-dire que leur périmètre est plus aisément déformable, selon la direction axiale. Ces propriétés améliorent très sensiblement l'aptitude du pneumatique de l'invention à l'ovalisation et donc sa montabilité ; ainsi, il est désormais possible d'utiliser des gommes d'ancrage à dureté élevée, favorables au comportement routier, sans passer nécessairement par l'emploi de câbles traités "grand-allongement".
Les pneumatiques de l'invention peuvent être destinés à des véhicules du type tourisme, 4x4, "SUV" (*Sport Utility Vehicles*), mais également à des véhicules deux-roues tels que motos, ou à des véhicules industriels choisis parmi camionnettes, "Poids-lourd" - i.e., métro, bus, engins de transport routier (camions, tracteurs, remorques), véhicules hors-la-route -, engins agricoles ou de génie civil, avions, autres véhicules de transport ou de manutention.
L'invention ainsi que ses avantages seront aisément compris à la lumière de la description et des exemples de réalisation qui suivent, ainsi que des figures 1 à 4 relatives à ces exemples qui schématisent, respectivement :

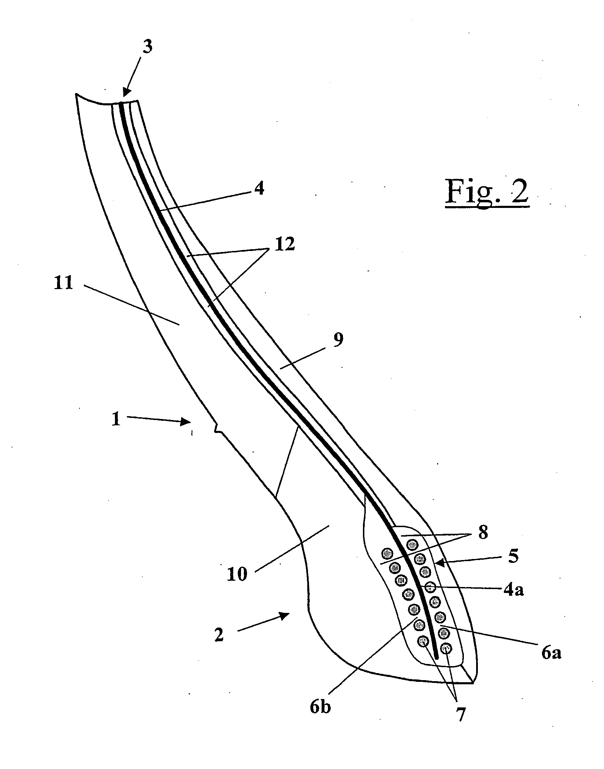

- une coupe transversale partielle montrant essentiellement une zone basse d'un pneumatique sans tringle, comportant notamment dans son bourrelet 2 une zone d'ancrage 5 d'une armature de carcasse 4, selon deux variantes de réalisation (Fig. 1 et 2) ;

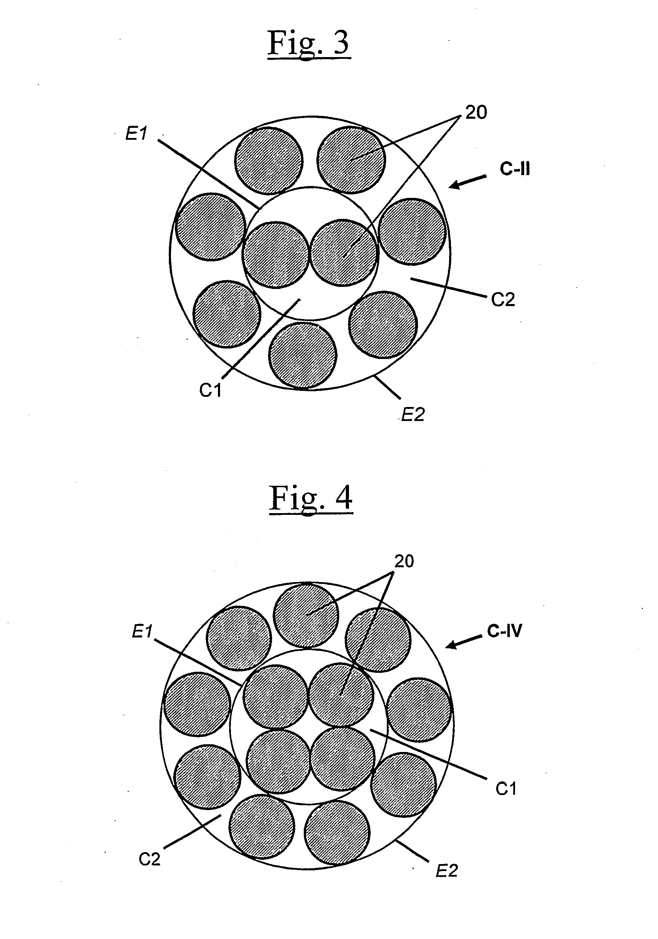

- une coupe transversale de câbles de constructions 2+7 (Fig. 3) et 4+9 (Fig. 4) utilisables dans ladite zone d'ancrage.

## I. DEFINITIONS ET TESTS

### I-1. Définitions

Dans la présente demande, on entend de manière connue par :

- "axiale", une direction parallèle à l'axe de rotation du pneumatique ; cette direction peut être "axialement intérieure" lorsqu'elle est dirigée vers l'intérieur du pneumatique et "axialement extérieure" lorsqu'elle est dirigée vers l'extérieur du pneumatique ;
- "bourrelet", la portion du pneumatique adjacente radialement intérieurement au flanc et dont la base est destinée à être montée sur un siège de jante d'une roue de véhicule ;
- "élastomère (ou indistinctement caoutchouc) diénique", un élastomère issu au moins en partie (c'est-à-dire un homopolymère ou un copolymère) de monomère(s) diène(s) (monomère(s) porteur(s) de deux doubles liaisons carbone-carbone, conjuguées ou non) ;
- "élastomère diénique essentiellement saturé" un élastomère diénique issu au moins en partie de monomères diènes conjugués, ayant un taux de motifs ou unités d'origine diénique (diènes conjugués) qui est inférieur à 15% (% en moles) ;
- "élastomère diénique fortement insaturé" un élastomère diénique du type essentiellement saturé, ayant un taux de motifs ou unités d'origine diénique (diènes conjugués) qui est supérieur à 50% (% en moles) ;
- "élastomère isoprénique", un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères ;
- "flanc", la portion du pneumatique, le plus souvent de faible rigidité de flexion, située entre le sommet et le bourrelet ;
- "radiale", une direction passant par l'axe de rotation du pneumatique et normale à celui-ci ; cette direction peut être "radialement intérieure" ou "radialement extérieure" selon qu'elle se dirige vers l'axe de rotation du pneumatique ou vers l'extérieur du pneumatique ;

- "élément de renforcement" ou "renfort", aussi bien des monofilaments que des multifilaments, ou des assemblages comme des câbles, des retors ou bien encore n'importe quel type d'assemblage équivalent, et ceci, quels que soient la matière et le traitement de ces renforts, par exemple traitement de surface ou enrobage tel que gommage, ou encore pré-encollage pour favoriser l'adhésion sur le caoutchouc ;
- "renfort orienté circonférentiellement" ou "renfort circonférentiel", un renfort orienté sensiblement parallèlement à la direction circonférentielle du pneumatique, c'est-à-dire faisant avec cette direction un angle ne s'écartant pas de plus de cinq degrés de la direction circonférentielle ;
- "renfort orienté radialement" ou "renfort radial", un renfort contenu sensiblement dans un même plan axial ou dans un plan faisant avec un plan axial un angle inférieur ou égal à 10 degrés.

I-2. Tests

A) Mesures dynamométriques

Pour ce qui concerne les fils et câbles métalliques, les mesures de force à la rupture notée Fm (charge maximale en N), de résistance à la rupture notée Rm (en MPa) et d'allongement à la rupture noté At (allongement total en %) sont effectuées en traction selon la norme ISO 6892 de 1984.

En ce qui concerne les compositions de caoutchouc, les mesures de module sont effectuées en traction, sauf indication contraire selon la norme ASTM D 412 de 1998 (éprouvette "C") : on mesure en seconde élongation (c'est-à-dire après un cycle d'accommodation) les modules sécants vrais (ou modules d'Young) ramenés à la section réelle de l'éprouvette à 10% d'allongement, notés E10 et exprimés en MPa (conditions normales de température et d'hygrométrie selon la norme ASTM D 1349 de 1999).

B) Test de fluage statique

Le test dit "de fluage statique" est un test dans lequel on prépare des éprouvettes de composition de caoutchouc dont la partie utile a une longueur de 70 mm, une largeur de 5 mm et une épaisseur de 2,5 mm (ces éprouvettes sont découpées dans des plaques vulcanisées d'épaisseur 2,5 mm) ; on met en place les éprouvettes dans une étuve à 150°C et on leur accroche immédiatement une masse de 3 kg ; le test s'effectue ainsi avec une contrainte initiale de :

$$\sigma_0 = \frac{Mg}{S_0} = 2{,}35 \ MPa$$

avec M : masse appliquée, g : accélération de la pesanteur et $S_0$ section initiale de l'éprouvette de mesure ; on mesure en fonction du temps l'allongement de la partie utile de l'éprouvette ; le "taux de fluage statique" correspond à la variation de déformation dans un temps donné, par exemple entre 3 et 5 heures de test :

$$\tau = \frac{\Delta \varepsilon}{\Delta t}$$

avec : $\Delta\varepsilon = \varepsilon(t_2) - \varepsilon(t_1)$ variation de la déformation mesurée pendant $\Delta t = t_2 - t_1$ en minutes (min).

C) Test de rhéométrie

Le test dit "de rhéométrie" est un test de cisaillement alterné à une déformation de $\pm$ 0,2 degrés, une fréquence de 100 cycles/min, une température de 197°C et une durée de 10 min (rhéomètre de la société Monsanto). Le test est réalisé sur un disque de composition de caoutchouc à l'état cru, on enregistre l'évolution pendant les 10 min du couple résultant du cisaillement imposé entre les deux faces du disque et on note l'évolution du couple après le maximum mesuré : si le couple mesuré reste stable, il n'y a pas de réversion, c'est-à-dire de diminution de la raideur de l'éprouvette ; si le couple mesuré diminue, il y a une réversion. Le phénomène de réversion traduit une diminution de la rigidité de l'éprouvette dans les conditions du test, c'est donc un test de la stabilité thermique du mélange à haute température.

On note :

$$r = \frac{C_{max} - C_{10}}{C_{max}} \times 100$$

le taux de réversion à l'issue du test ; $C_{max}$ est le couple maximum mesuré et $C_{10}$ est le couple mesuré après 10 min.

## II. DESCRIPTION DETAILLEE DE L'INVENTION

Le pneumatique de l'invention comporte, à titre de moyens d'ancrage de son armature de nappe carcasse, une matrice ou composition de caoutchouc (dite gomme d'ancrage) avec laquelle coopèrent des câbles à couches spécifiques (dits câbles d'ancrage), comme expliqué en détail ci-après.

Dans la présente description, sauf indication expresse différente, tous les pourcentages (%) indiqués sont des % massiques.

### II-1. Composition de caoutchouc

La composition comporte au moins un élastomère diénique et tous les constituants usuels tels que charge renforçante, système de réticulation et autres additifs, comme décrit ci-après.

### A) Elastomère diénique

Les élastomères diéniques peuvent être classés de manière connue en deux catégories, ceux dits essentiellement insaturés et ceux dits essentiellement saturés. C'est ainsi, par exemple, que les caoutchoucs butyle ou les copolymères de diènes et d'alpha-oléfines type EPDM entrent dans la définition d'élastomères diéniques essentiellement saturés (taux de motifs d'origine diénique faible ou très faible, toujours nettement inférieur à 15%).

Bien qu'elle soit applicable à tout type d'élastomère diénique, l'homme du métier du pneumatique comprendra aisément que la présente invention est préférentiellement mise en oeuvre avec des élastomères diéniques du type fortement insaturés.

L'élastomère diénique est notamment choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères. De tels copolymères sont plus préférentiellement choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'isoprène-styrène (SIR) et les copolymères d'isoprène-butadiène-styrène (SBIR).

On utilise plus préférentiellement au moins un élastomère isoprénique, encore plus préférentiellement du caoutchouc naturel ou un polyisoprène de synthèse du type cis-1,4 ; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

L'élastomère isoprénique peut être utilisé seul ou en coupage avec d'autres élastomères diéniques, notamment des élastomères SBR et/ou BR tels que précités, que l'élastomère isoprénique soit présent à titre majoritaire ou non parmi l'ensemble des élastomères diéniques utilisés.

Ainsi, selon un mode particulier de réalisation de l'invention, on peut utiliser par exemple, en coupage avec l'élastomère isoprénique (notamment du caoutchouc naturel) un copolymère SBR ayant une Tg (température de transition vitreuse, mesurée selon ASTM D3418) comprise de préférence entre -70°C et -10°C, qu'il soit préparé en émulsion (ESBR) ou en solution (SSBR), selon une proportion de 0 à 70 pce (parties en poids pour cent parties d'élastomère), le reste (soit 30 à 100 pce) étant constitué par l'élastomère isoprénique. On utilise alors plus particulièrement un SSBR. Auxdits SBR peut être également associé un BR possédant de préférence plus de 90% (% molaire) de liaisons cis-1,4, ledit BR ayant une Tg comprise de préférence entre -110°C et -50°C.

Enfin, le ou les élastomères diéniques peuvent être utilisés en association avec tout type d'élastomère synthétique autre que diénique, voire avec des polymères autres que des élastomères, par exemple des polymères thermoplastiques.

### B) Autres constituants

La composition de caoutchouc comporte également tout ou partie des additifs habituellement utilisés dans les matrices de caoutchouc destinées notamment à la fabrication des zones basses de pneumatiques, tels que par exemple des charges renforçantes comme le noir de carbone ou des charges inorganiques comme la silice, des agents de couplage pour charge inorganique, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des agents facilitant la mise en oeuvre (processabilité) des compositions à l'état cru, des stéaramides, des résines tackifiantes, un système de réticulation à base soit de soufre, soit de donneurs de soufre et/ou de peroxyde, des accélérateurs, des activateurs ou retardateurs de vulcanisation, des agents antiréversion tels que par exemple l'hexathiosulfonate de sodium ou le N,N'-m-phénylène-biscitraconimide, des accepteurs et donneurs de méthylène, des résines renforçantes, des bismaléimides, des systèmes promoteurs d'adhésion connus du type "RFS" (résorcinol-formaldéhyde-silice) ou sels métalliques, notamment sels de cobalt ou de nickel.

L'homme de l'art saura, à la lumière de la présente description, ajuster la formulation de la composition de caoutchouc afin d'atteindre les niveaux de rigidité (module d'élasticité) souhaités, et donner une excellente résistance au fluage à haute température et une très bonne stabilité à haute température.

La résistance au fluage est essentielle pour obtenir un ancrage solide et durable des armatures de carcasse dans les bourrelets et la stabilité thermique à haute température est elle aussi importante en raison des conditions thermiques très sévères que peuvent subir en service certains bourrelets de pneumatiques, notamment des pneumatiques pour véhicules lourds, routiers ou non.

Ainsi, de préférence, la gomme d'ancrage supporte sans rompre une sollicitation de fluage statique à 150°C sous une contrainte initiale de 2,35 MPa pendant au moins 5 heures ; plus préférentiellement, son taux de fluage statique à 150°C, sous une contrainte initiale de 2,35 MPa, reste inférieur à $2.10^{-3}$/min entre 3 et 5 heures de sollicitation. D'autre part et de préférence, ladite gomme a un taux de réversion, après 10 min à 197°C, qui est inférieur à 10% et plus préférentiellement inférieur à 5%.

Le système de réticulation est préférentiellement un système de vulcanisation à base de soufre et d'un accélérateur de vulcanisation. On peut utiliser tout composé susceptible d'agir comme accélérateur de vulcanisation des élastomères diéniques en présence de soufre, en particulier ceux choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés. De préférence, on utilise un accélérateur primaire du type sulfénamide.

A ce système de vulcanisation viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (par exemple diphénylguanidine), etc.

Le soufre est utilisé à un taux préférentiel compris entre 3 et 15 pce (parties en poids pour cent parties d'élastomère), plus préférentiellement entre 5 et 12 pce. L'accélérateur primaire de vulcanisation, par exemple un sulfénamide, est utilisé à un taux préférentiel compris entre 0,5 et 7 pce, plus préférentiellement compris entre 1 et 5 pce.

Le taux de charge renforçante, par exemple noir de carbone ou charge inorganique renforçante telle que silice, est de préférence supérieur à 50 pce, par exemple compris entre 60 et 140 pce. Il est plus préférentiellement supérieur à 70 pce, par exemple entre 70 et 120 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772).

Comme charges inorganiques renforçantes conviennent notamment des charges minérales du type siliceuse, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2$/g, de préférence de 30 à 400 $m^2$/g. A titres de silices précipitées hautement dispersibles (dites "HD"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber. Comme exemples d'alumines renforçantes, on peut citer les alumines "Baikalox" "A125" ou "CR125" de la société Baïkowski, "APA-100RDX" de Condea, "Aluminoxid C" de Degussa ou "AKP-G015" de Sumitomo Chemicals.

Pour coupler l'élastomère diénique à la charge inorganique renforçante, le cas échéant, on utilise un agent de couplage (ou agent de liaison) au moins bifonctionnel destiné de manière connue à assurer une connexion suffisante, de nature chimique et/ou physique, entre la charge inorganique (surface de ses particules) et l'élastomère diénique, en particulier des organosilanes ou des polyorganosiloxanes bifonctionnels.

Dans le pneumatique selon l'invention, la composition de caoutchouc a pour caractéristique préférentielle de présenter, à l'état vulcanisé, un module sécant en extension, à 10% d'allongement (noté E10), qui est supérieur à 20 MPa, plus préférentiellement supérieur à 30 MPa. C'est dans ces domaines de rigidité, notamment entre 40 et 70 MPa, que l'on a observé le meilleur compromis de performances.

Dans les cas des plus fortes rigidités, la composition de caoutchouc pourra avantageusement comprendre une résine renforçante additionnelle constituée par exemple d'un accepteur de méthylène tel qu'une résine formophénolique, à un taux préférentiel compris entre 3 et 15 pce, plus préférentiellement compris entre 5 et 12 pce, et un donneur de méthylène tel que l'hexaméthylènetétramine ("HMT") ou encore l'hexaméthoxy-méthylmélamine ("HMMM", encore notée "H3M"), à un taux préférentiel compris entre 1 et 10 pce, plus préférentiellement compris entre 3 et 7 pce.

II-2. Câble à couches (M+N)

Le câble à couches du pneumatique selon l'invention est un câble métallique à deux couches de construction M+N comportant un noyau ou couche interne (notée C1) de M fils de diamètre $d_1$ enroulés ensemble en hélice selon un pas $p_1$, cette couche C1 étant elle-même entourée d'une couche externe (notée C2) de N fils de diamètre $d_2$ enroulés ensemble en hélice selon un pas $p_2$, ce câble présentant en outre les caractéristiques suivantes ($d_1$, $d_2$, $p_1$ et $p_2$ en mm) :

- $2 \leq M \leq 4$
- $M+3 \leq N \leq M+7$
- $0,25 < d_1 < 0,40$ ;
- $0,25 < d_2 < 0,40$ ;
- $3,5 < p_1 < 7 < p_2 < 14$.

Toutes les caractéristiques ci-dessus sont bien entendu mesurées lorsque le câble est au repos et son axe rectiligne.

Par câble métallique, on entend ici par définition un câble formé de fils constitués majoritairement (c'est-à-dire pour plus de 50% de ces fils) ou intégralement (pour 100% des fils) d'un matériau métallique.

Les fils des couches C1 et C2 peuvent avoir un diamètre identique ou différent d'une couche à l'autre. On utilise de préférence des fils de même diamètre d'une couche à l'autre (soit $d_1 = d_2$), notamment pour simplifier le procédé de câblage, comme schématisé par exemple sur les figures 3 et 4 annexées.

On rappelle ici que de manière connue le pas « p » représente la longueur, mesurée parallèlement à l'axe du câble, au bout de laquelle un fil ayant ce pas effectue un tour complet autour dudit axe du câble.

L'utilisation de pas $p_1$ et $p_2$ différents fait que, de manière connue, les fils des couches C1 et C2 sont essentiellement disposés selon deux couches cylindriques (ou tubulaires), adjacentes et concentriques, de telle manière que, au moins dans le câble au repos, l'épaisseur de la couche externe C2 est sensiblement égale au diamètre des fils qui la constituent ; il en résulte que les sections transversales de la couche interne C1 et de la couche externe C2, comme celle du câble, ont une enveloppe externe ou un contour (noté respectivement *E1* et *E2* sur les figures 3 et 4) qui est sensiblement circulaire.

Les câbles à couches cylindriques ou tubulaires de l'invention ne doivent en particulier pas être confondus avec des câbles à couches dits "compacts", assemblages de fils enroulés au même pas et dans la même direction de torsion ; dans de tels câbles, la compacité est telle que pratiquement aucune couche distincte de fils n'est visible ; il en résulte que la section transversale de tels câbles a un contour qui n'est plus circulaire, mais polygonal.

De préférence, les couches C1 et C2 sont enroulées dans le même sens de torsion (soit S/S ou Z/Z), ce qui présente comme avantage notable de minimiser la pression de contact entre les fils.

Selon un mode préférentiel de réalisation de l'invention, la couche C2 comporte de 6 à 10 fils (soit $6 \leq N \leq 10$), plus préférentiellement encore de 7 à 9 fils (soit $7 \leq N \leq 9$). La relation $M+4 \leq N \leq M+6$ est avantageusement vérifiée.

Selon un autre mode préférentiel, pour une meilleure pénétrabilité des câbles par la gomme d'ancrage, la couche externe C2 est une couche tubulaire de N fils dite "insaturée" ou "incomplète", c'est-à-dire que, par définition, il existe suffisamment de place dans cette couche tubulaire C2 pour y ajouter au moins un (N+1)ème fil de diamètre $d_2$, plusieurs des N fils se trouvant éventuellement au contact les uns des autres. Réciproquement, cette couche tubulaire C2 serait qualifiée de "saturée" ou "complète" s'il n'existait pas suffisamment de place dans cette couche pour y ajouter au moins un (N+1)ème fil de diamètre $d_2$.

Parmi les câbles préférentiels utilisables, on citera particulièrement les câbles de constructions 2+6, 2+7, 2+8, 3+7, 3+8, 3+9, 4+8, 4+9, ou 4+10, notamment ceux constitués de fils ayant sensiblement le même diamètre d'une couche à l'autre (soit $d_1 = d_2$). Selon un mode plus préférentiel de réalisation l'invention, le câble sélectionné a pour construction M+5 (sa couche externe C2 comporte 5 fils de plus que sa couche interne C1) ; en d'autres termes, le câble est choisi plus particulièrement parmi les câbles de constructions 2+7, 3+8 et 4+9.

Les figures 3 et 4 schématisent, en coupe perpendiculaire à l'axe du câble (supposé rectiligne et au repos), deux exemples de tels câbles préférentiels 2+7 (câble noté C-II dans les exemples qui suivent) et 4+9 (câble noté C-IV dans les exemples qui suivent), respectivement. La couche interne C1, formée de deux ou quatre fils 20 enroulés ensemble en hélice selon un pas $p_1$, est elle-même entourée et au contact d'une couche externe C2 de sept ou neuf fils 20 enroulés ensemble en hélice selon un pas $p_2$, et donc d'épaisseur sensiblement égale au diamètre $d_2$ desdits fils. On voit bien que les fils sont ainsi disposés selon deux couches adjacentes et concentriques, tubulaires (couche C1 de contour *E1* et couche C2 de contour *E2*).

Selon un autre mode de réalisation préférentiel de l'invention, les caractéristiques suivantes sont vérifiées ($d_1$, $d_2$, $p_1$ et $p_2$ en mm) :

- 0,30 < $d_1$ < 0,40 ;
- 0,30 < $d_2$ < 0,40 ;
- 4 < $p_1$ < 7 et 8 < $p_2$ < 14.

C'est dans ces domaines étroits de diamètres $d_1$ et $d_2$ d'une part, de pas courts $p_1$ et $p_2$ d'autre part, que l'on a obtenu le meilleur compromis de performances. Plus préférentiellement encore, pour ces mêmes raisons, les relations suivantes sont vérifiées ($p_1$ et $p_2$ en mm) :

$$4{,}5 \leq p_1 \leq 6{,}5 \text{ et } 8{,}5 \leq p_2 \leq 13{,}5.$$

L'allongement total à la rupture (At) du câble, somme de ses allongements structural, élastique et plastique (At = As + Ae + Ap), est de préférence supérieur à 2,5%, plus préférentiellement supérieur à 3,0%, encore plus préférentiellement supérieur à 3,5%.

Dans le pneumatique selon l'invention, le présent câble d'ancrage pourrait être traité grand allongement, pour lui conférer un allongement fonctionnel Af (Af = Ae + Ap) supérieur à 4%, de préférence supérieur à 5%, plus préférentiellement encore supérieur à 6%. Un tel traitement peut consister, on le rappelle, en un traitement thermique par effet Joule, par convection statique ou encore par induction, réalisé directement sur le câble, comme décrit dans la demande EP-A-751 015 précitée.

L'invention est préférentiellement mise en oeuvre avec un câble en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer) tels que décrits par exemple dans les demandes EP-A-648 891 ou WO-A-98/41682. Mais il est bien entendu possible d'utiliser d'autres aciers ou d'autres alliages.

Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement.

Selon un mode de réalisation préférentiel, l'acier utilisé est recouvert d'une couche de laiton (alliage Zn-Cu) ou de zinc ; on rappelle que lors du procédé de fabrication des fils, le revêtement de laiton ou de zinc facilite le tréfilage du fil, ainsi que le collage du fil avec le caoutchouc. Mais les fils pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Lorsque les câbles sont utilisés pour renforcer des bourrelets de pneu sans tringle, ils sont préférentiellement en acier au carbone et possèdent une résistance en traction (Rm) supérieure à 2000 MPa.

L'homme du métier sait comment fabriquer des fils d'acier présentant une telle résistance, en ajustant notamment la composition de l'acier et les taux d'écrouissage final de ces fils, en fonction de ses besoins propres particuliers, en utilisant par exemple des aciers au carbone micro-alliés contenant des éléments d'addition spécifiques tels que Cr, Ni, Co, V, ou divers autres éléments connus (voir par exemple *Research Disclosure* 34984 - *"Micro-alloyed steel cord constructions for tyres"* - mai 1993 ; *Research Disclosure* 34054 - *"High tensile strength steel cord constructions for tyres "* - août 1992).

Lorsqu'un acier au carbone est utilisé, sa teneur en carbone est de préférence comprise entre 0, 1 % et 1,2%, notamment entre 0,5% et 1,1 %. Elle est plus préférentiellement comprise entre 0,6% et 1,0% (% en poids d'acier), une telle teneur représentant un bon compromis entre les propriétés mécaniques requises pour le câble et la faisabilité des fils.

Le câble présentement décrit pourrait être pourvu d'une frette externe, constituée par exemple d'un fil unique, métallique ou non, enroulé en hélice autour du câble selon un pas plus court que celui de la couche externe, et un sens d'enroulement opposé ou identique à celui de cette couche externe. Cependant, grâce à sa structure spécifique, le câble de l'invention, déjà auto-fretté, ne nécessite généralement pas l'emploi d'un fil de frette externe, ce qui résout avantageusement les problèmes d'usure entre la frette et les fils de la couche la plus externe du câble.

Les câbles à couches M+N précédents sont fabriqués avec des dispositifs de câblage et selon des procédés bien connus de l'homme du métier qui ne sont pas décrits ici pour la simplicité de l'exposé. En raison de pas $p_1$ et $p_2$ différents, ils nécessitent deux opérations successives (fabrication de la première couche interne C1 puis câblage de la seconde couche externe autour de cette couche C1), ces deux opérations pouvant avantageusement être réalisées en ligne à l'aide de deux câbleuses (par exemple câbleuses Barmag) disposées en série.

II-3. Composite et Pneumatique de l'invention

Comme décrit précédemment, le câble de l'invention peut avantageusement constituer une partie d'une zone bourrelet d'un pneumatique dépourvu de tringle conventionnelle massive, lui-même conforme à l'invention, ladite partie de zone bourrelet étant destinée à assurer l'ancrage de l'armature carcasse dudit pneumatique sans tringle.

Un tel pneu sans tringle, tel que décrit par exemple dans sa construction générale dans les documents EP-A-582 196, EP-A-664 231, EP-A-664 232, EP-A-664 233, WO-A-98/54006 ou WO-A-2004/009380 précités, comporte généralement un sommet surmontée d'une bande de roulement, une armature de sommet, une armature de carcasse passant dans les flancs et rejoignant deux bourrelets conçus pour être montés sur une jante de roue de véhicule. Ladite armature de carcasse comporte des premiers renforts (ou "renforts radiaux") disposés de façon adjacente et pratiquement parallèles les uns aux autres, alignés circonférentiellement en au moins un alignement circonférentiel depuis au moins l'un desdits bourrelets vers l'un desdits flancs et ancrée dans ledit bourrelet, ce dernier comportant une zone d'ancrage permettant le maintien de l'armature de carcasse et comprenant au moins un second renfort ("renfort d'ancrage" ou "câble d'ancrage") orienté circonférentiellement coopérant avec une portion adjacente de l'armature de carcasse par l'intermédiaire d'une composition de caoutchouc (ou "gomme d'ancrage") en contact avec le renfort d'ancrage et les tronçons adjacents des premiers renforts radiaux. Le pneumatique de la présente invention est **caractérisé en ce que** le câble d'ancrage est tel que défini au paragraphe II-2 qui précède.

Les renforts radiaux ci-dessus sont par exemple des câblés textiles en polyester (par exemple PET HMLS), PEN, rayonne ou autre cellulose, Nylon, aramide ou encore en matériau hybride (par exemple aramide/Nylon).

A titre d'exemple non limitatif, sont schématisés à la figure 1, en coupe transversale partielle, un bourrelet et un flanc d'un tel pneumatique conforme à l'invention, dans lequel l'ancrage conventionnel, par retournement de l'armature de carcasse autour d'une tringle massive, est rappelons-le remplacé par un agencement dans lequel on dispose de façon adjacente à la structure de renforts radiaux, des câbles d'ancrage circonférentiel, le tout étant noyé dans un mélange caoutchouteux ou gomme d'ancrage.

Ce pneumatique comprend un flanc 1 adjacent à un bourrelet 2. Une armature de carcasse 3 s'étend circonférentiellement du bourrelet 2 vers le flanc 1 et comporte dans l'exemple présenté un alignement circonférentiel de premiers renforts radiaux 4. Cette armature de carcasse 3 peut être agencée de façon continue d'un bourrelet à l'autre, en passant par les flancs et le sommet du pneumatique, ou encore, elle peut comporter deux ou plusieurs parties, agencées par exemple le long des flancs, notamment sans couvrir la totalité du sommet. Les renforts radiaux 4, par exemple ici des câblés textiles en PET HMLS, sont orientés radialement dans les bourrelets et les flancs et sont ancrés dans une zone d'ancrage 5 du bourrelet 2.

Selon un mode particulier de réalisation de l'invention, la zone d'ancrage 5 comprend trois enroulements ou "piles" circonférentiels 6a, 6b et 6c de second renfort ou câble d'ancrage 7, disposés de part et d'autre du tronçon 4a des premiers renforts radiaux 4 adjacents, lesdites piles 6a, 6b et 6c coopérant avec une gomme d'ancrage 8 dans laquelle ils sont incorporés.

Cette gomme d'ancrage 8 enrobe complètement le tronçon 4a des renforts radiaux 4, et les enroulements ou piles circonférentiels 6a, 6b et 6c des câbles d'ancrage 7, de façon à réaliser une structure solide apte à transmettre les sollicitations mécaniques de service entre le tronçon 4a des renforts radiaux 4 dans la zone d'ancrage 5 du bourrelet 2 et les enroulements circonférentiels, notamment transmettre les efforts subis par les premiers renforts 4 dus à la pression de gonflage du pneumatique. Les piles 6 peuvent être réalisées par exemple par juxtaposition de plusieurs éléments circonférentiels de câbles 7 différents, ou par enroulement (sensiblement à zéro degré) en spirale d'un seul et même câble 7, les spires étant bien entendu, en tout cas, non jointives. Le câble d'ancrage 7 est par exemple un câble de construction 2+7 tel que décrit au paragraphe II-2 précédent et illustré à la figure 3. Le nombre total de ces câbles ou d'enroulements du même câble est par exemple compris dans un domaine de 15 à 30 environ, pour les trois piles 6a, 6b et 6c confondues.

A titre d'exemple, la distance moyenne inter-câbles (ou inter-enroulements) est de l'ordre de 0,3 mm, la distance moyenne inter-piles (entre piles 6b et 6c sur cette figure 1) est de l'ordre de 0,5 mm et la distance minimale (pour éviter tout contact direct entre textile et métal) séparant le tronçon 4a et chacune des deux piles 6a et 6b est comprise entre 0,5 et 0,8 mm.

Axialement intérieurement relativement à l'enroulement circonférentiel de câble d'ancrage 6a, on trouve un mélange de caoutchouc 9 usuel à titre de "gomme intérieure" dont la fonction connue est d'assurer l'étanchéité avec l'intérieur de l'enveloppe du pneumatique. Axialement extérieurement relativement à l'enroulement circonférentiel de câble d'ancrage 6c, on trouve un mélange protecteur 10, puis radialement extérieurement, un mélange flanc 11 qui le remplace progressivement. Radialement extérieurement à la zone d'ancrage 5, les renforts radiaux 4 de l'armature de carcasse 3 sont en contact direct avec un mélange 12.

Les premiers renforts 4 de ce bourrelet de pneumatique sont donc en contact avec deux mélanges caoutchouteux différents, la gomme d'ancrage 8 dans la zone d'ancrage 5 et le mélange 12 radialement extérieurement. La gomme d'ancrage a comme caractéristique mécanique préférentielle un module d'élasticité (E10) supérieur à 20 MPa tandis que le mélange 12 a une rigidité plus faible, avec un module compris entre 3 et 10 MPa.

Dans la zone d'ancrage 5 du bourrelet 2, la gomme d'ancrage 8 est le seul mélange caoutchouteux en contact avec les premiers 4 et seconds 7 renforts. Cette gomme d'ancrage donne à cette structure une excellente résistance mécanique aux efforts subis lors du gonflage du pneumatique et en roulage.

Bien entendu, n'est représenté à la figure 1 qu'un exemple possible de structure d'ancrage de la zone basse de pneumatique selon l'invention.

L'homme du métier comprendra aisément qu'un grand nombre d'autres variantes sont possibles, par exemple des zones d'ancrage 5 ne comportant que deux piles d'ancrage 6a et 6b, une de part et d'autre du tronçon 4a des renforts radiaux 4, ou plus de trois piles.

La figure 2 schématise une coupe transversale partielle d'un autre exemple de pneumatique selon l'invention, dont la zone d'ancrage 5 comporte la même gomme d'ancrage 8 mais seulement deux piles 6a et 6b de câble d'ancrage 7. Le câble d'ancrage 7 est un câble de construction 4+9 tel que décrit au paragraphe II-2 précédent et illustré à la figure 4. Le nombre total de câbles ou d'enroulements du même câble est par exemple compris dans un domaine de 10 à 25 environ, pour les deux piles 6a et 6b confondues.

A titre d'exemple, la distance moyenne inter-câbles (ou inter-enroulements) 7 est de l'ôrdre de 0,3 mm et la distance minimale séparant le tronçon 4a et chacune des deux piles 6a et 6b est comprise entre 0,5 et 0,8 mm.

D'autres variantes possibles de réalisation du pneumatique de l'invention consisteront par exemple en l'emploi de plusieurs tronçons 4a de renforts radiaux 4 dans la zone d'ancrage 5 du bourrelet 2, ou de plusieurs alignements 4 de renforts radiaux dans la même armature de carcasse 3, y compris dans le flanc 1, voire encore de plusieurs armatures de carcasse 3 dans ce flanc 1.

Une autre variante possible de réalisation consistera en un ancrage non-linéaire tel que décrit dans la demande WO-A-2004/009380 précitée.

Dans une autre variante possible de réalisation de l'invention, prise seule ou en combinaison avec au moins l'une des variantes précédemment décrites, les renforts radiaux individuels 4 pourraient bien entendu être remplacés par des groupements de plusieurs renforts radiaux parallèles, regroupés entre eux par exemple sous forme de bandelettes caoutchoutées comportant lesdits renforts radiaux, comme décrit par exemple dans la demande EP-A-919 406.

A titre non limitatif, il est à noter que la fabrication des pneumatiques selon l'invention peut avantageusement être réalisée selon un procédé n'impliquant pas ou peu de transformations de formes à l'état cru. Par exemple, on peut assembler l'ébauche du futur pneumatique sur un noyau rigide imposant la forme de sa cavité intérieure. On applique sur ce noyau, dans l'ordre requis par l'architecture finale, tous les constituants individuels du pneumatique, qui sont disposés directement à leur place finale, aucune portion du pneumatique n'étant ultérieurement déplacée ni repliée contre une autre, comme c'est généralement le cas dans les modes d'assemblage classiques. Cette fabrication peut notamment utiliser les dispositifs décrits dans les documents de brevet EP-A-243 851 (ou US-A-4 795 523) pour la pose des renforts radiaux de l'armature de carcasse et EP-A-264 600 (ou US-A-4 963 207) pour la pose des gommes ou compositions de caoutchouc. Le pneumatique peut alors être moulé et vulcanisé comme exposé par exemple dans le document de brevet EP-A-242 840 (ou US 4 895 692).

## III. EXEMPLES DE REALISATION DE L'INVENTION

### III-1. Câbles d'ancrage

Pour la réalisation d'exemples de réalisation conformes à l'invention, on utilise ci-après des câbles à couches cylindriques de constructions préférentielles 2+7 et 4+9 telles que schématisées aux figures 3 et 4, constitués de fils fins en acier au carbone revêtus de laiton.

Les fils en acier au carbone sont préparés de manière connue, en partant par exemple de fils machine (diamètre 5 à 6 mm) que l'on écrouit tout d'abord, par laminage et/ou tréfilage, jusqu'à un diamètre intermédiaire voisin de 1 mm, ou encore en partant directement de fils commerciaux intermédiaires dont le diamètre est voisin de 1 mm. L'acier utilisé est un acier au carbone du type à haute résistance (dit HT pour *"High Tensile"*) dont la teneur en carbone est de 0,82% environ, comportant 0,5% de manganèse environ, le reste étant constitué de fer et des impuretés inévitables habituelles liées au procédé de fabrication de l'acier (pour exemple, teneurs en silicium : 0,25% ; phosphore : 0,01 % ; soufre : 0,01 % ; chrome : 0,11%; nickel : 0,03% ; cuivre ; 0,01% ; aluminium : 0,005% ; azote : 0,003%).

Les fils de diamètre intermédiaire subissent un traitement de dégraissage et/ou décapage, avant leur transformation ultérieure. Après dépôt d'un revêtement de laiton sur ces fils intermédiaires, on effectue sur chaque fil un écrouissage dit "final" (i.e., après le dernier traitement thermique de patentage), par tréfilage à froid en milieu humide avec un lubrifiant de tréfilage qui se présente par exemple sous forme d'une émulsion ou d'une dispersion aqueuses.

Les fils ainsi préparés, tous de diamètre égal à 0,35 mm environ, ont les propriétés mécaniques suivantes :

- Force-rupture : 265 N ;
- Module d'Young : 210 GPa ;
- Résistance à la rupture : 2790 MPa ;
- Allongement à la rupture : 2,2% (Ae = 1,4% + Ap = 0,8%).

Ces fils sont ensuite assemblés sous forme de différents câbles à couches cylindriques, référencés C-I à C-V, dont la construction et les propriétés mécaniques sont données dans le tableau 1.

Tableau 1

| Câble | Construction | $p_1$ (mm) | $p_2$ (mm) | Fm (daN) | Rm (MPa) | At (%) | Af (%) |
|-------|--------------|------------|------------|----------|----------|--------|--------|
| C-I | 2+7 | 7.5 | 15.0 | 196 | 2275 | 5.3 | 5.2 |
| C-II | 2+7 | 5.0 | 10.0 | 215 | 2425 | 3.4 | 3.2 |
| C-III | 4+9 | 7.5 | 15.0 | 280 | 2210 | 5.9 | 5.7 |
| C-IV | 4+9 | 5.0 | 10.0 | 305 | 2275 | 3.8 | 3.5 |
| C-V | 4+9 | 5.0 | 10.0 | 275 | 2105 | 6.5 | 6.2 |

Les câbles de construction [2+7], non frettés (sans fil de frette externe), sont formés de 9 fils au total. Ils comportent une couche interne C1 de 2 fils enroulés ensemble en hélice (direction S) selon le pas $p_1$, cette couche C1 étant au contact d'une couche externe cylindrique de 7 fils eux-mêmes enroulés ensemble en hélice (direction S) autour de l'âme, selon le pas $p_2$.

Les câbles de construction [4+9], également non frettés, sont formés de 13 fils au total. Ils comportent une couche interne C1 de 4 fils enroulés ensemble en hélice (direction S) selon le pas $p_1$, cette couche C1 étant au contact d'une couche externe cylindrique de 9 fils eux-mêmes enroulés ensemble en hélice (direction S) autour de l'âme, selon le pas $p_2$.

A titre d'exemples, les figures 3 et 4 annexées, déjà commentées précédemment, représentent de manière schématique une coupe transversale de ces câbles à couches de construction 2+7 et 4+9, respectivement, de tels câbles pouvant être conformes ou non conformes à l'invention dans cette représentation générale.

Les câbles C-I et C-III possèdent des pas $p_1$ et $p_2$ conventionnels longs ($p_1$ = 7,5 mm et $p_2$ = 15 mm) qui ne vérifient donc pas les caractéristiques de pas préconisées par l'invention. Comme enseigné dans la demande EP-A-751 015 précitée, ils ont été soumis à un traitement thermique de recuit de restauration afin de leur conférer un allongement fonctionnel Af supérieur à 4,0%.

Les câbles C-II et C-IV possèdent des pas $p_1$ et $p_2$ courts ($p_1$ = 5 mm ; $p_2$ = 10 mm) qui satisfont aux exigences de l'invention. Ils sont donc utilisables dans le pneumatique de l'invention, sans nécessiter de traitement "grand-allongement" contrairement aux câbles témoins C-I et C-III. L'allongement total At de ces câbles C-II et C-IV est avantageusement supérieur à 3,0%.

Pour comparaison, le câble C-V, de même construction que le câble C-IV et donc adapté lui aussi au pneu de l'invention, a subi en plus un traitement grand-allongement, ce qui lui confère un allongement fonctionnel Af et un allongement total At très élevés, puisque tous deux supérieurs à 6,0%. Ce traitement a consisté à chauffer le câble en continu pendant son défilement, par induction sous atmosphère protectrice (par exemple hydrogène) ; la durée de chauffage était de 0,1 seconde environ, la température de traitement de 450°C. Après le chauffage, le câble a été refroidi sous atmosphère protectrice ($H_2$) puis enroulé sur bobine.

On note par ailleurs que tous les câbles C-II, C-IV et C-V vérifient avantageusement les relations préférentielles qui suivent ($d_1$, $d_2$, $p_1$ et $p_2$ en mm) :

- 0,30 < $d_1$ = $d_2$ < 0,40 ;
- 4,5 ≤ $p_1$ ≤ 6,5 ;
- 8,5 ≤ $p_2$ ≤ 13,5.

III-2. Gomme d'ancrage

Pour les tests qui suivent, les câbles d'ancrage C-I à C-IV précédemment décrits ont été associés à une même gomme d'ancrage à rigidité élevée (module E10 égal à environ 55 MPa).

Cette gomme d'ancrage est une composition connue à base d'élastomère diénique (coupage 50/50 de NR et de SSBR ayant une Tg d'environ -50°C), et de noir de carbone (environ 75 pce) à titre de charge renforçante. Elle comporte essentiellement, en plus, un antioxydant (environ 2 pce), une résine renforçante (environ 10 pce de résine formophénolique et 5 pce de donneur de méthylène H3M), un sel métallique (environ 4 pce de naphténate de cobalt) en tant que promoteur d'adhésion vis-à-vis du métal, enfin un système de vulcanisation (environ 9 pce de soufre, 1,5 pce d'accélérateur, 9 pce de ZnO et 1,5 pce d'acide stéarique).

III-3. Tests comparatifs sur pneumatiques

Les câbles et gommes d'ancrage ci-dessus sont utilisés comme structure d'ancrage d'une armature de carcasse de pneumatiques sans tringle à carcasse radiale, de dimension 225/45 R17 (indice de vitesse Y), conventionnellement fabriqués et en tous points identiques hormis la construction de leur zone d'ancrage 5.

Ces pneumatiques comportent de manière connue un sommet surmontée d'une bande de roulement, une armature de sommet et, en se référant maintenant par exemple aux numérotations des figures 1 ou 2, deux flancs 1 et deux bourrelets 2, une armature de carcasse 3 passant dans les deux flancs 2 et ancrée grâce à des moyens d'ancrage 5 (6a, 6b, 6c, 8) dans les deux bourrelets 2. L'armature de carcasse 3 comprend au moins un alignement circonférentiel de renforts radiaux 4, disposés de façon adjacente et pratiquement parallèles les uns aux autres, alignés circonférentiellement en au moins un alignement circonférentiel depuis au moins l'un desdits bourrelets 2 vers l'un desdits flancs 1. Les moyens d'ancrage 5 (6a, 6b, 6c, 8) desdits renforts radiaux 4 dans au moins un bourrelet 2 comprennent au moins un câble d'ancrage 7 orienté circonférentiellement, bordant axialement lesdits alignements circonférentiels des renforts radiaux 4 et coopèrent avec une portion adjacente de l'armature de carcasse 3 par l'intermédiaire d'une gomme d'ancrage 8 en contact avec le câble d'ancrage 7 et les tronçons adjacents 4a des premiers renforts radiaux 4. Les câbles d'ancrage 7 utilisés dans ces pneumatiques sont les câbles C-I à C-IV du tableau 1.

Les pneumatiques correspondant aux câbles C-I à C-IV sont notés respectivement P-I à P-IV. Ils comportent plus précisément une zone basse telle que schématisée sur la figure 1 en ce qui concerne le câble d'ancrage C-II (avec 3 piles d'ancrage 6a, 6b et 6c comportant au total 21 enroulements de câble 7), ou sur la figure 2 en ce qui concerne le câble d'ancrage C-IV (avec seulement 2 piles d'ancrage 6a et 6b comportant au total 15 enroulements de câble 7). Dans chacune des piles d'ancrage 6, les enroulements 7 sont disposés selon une direction circonférentielle, parallèlement les uns aux autres, distants les uns des autres d'environ 0,3 mm.

Ces pneumatiques P-I à P-IV, montés ou non sur une jante de dimension appropriée selon le type d'analyse réalisée, ont été testés en conditions statiques et dynamiques, sur différentes machines de roulage ou autre tests, afin de comparer leurs performances sur les critères définis ci-après.

A) Endurance en roulage longue durée :

L'endurance en roulage est appréciée par un test de roulage de très longue durée (40 000 km) sur une machine de roulage automatique, sous une charge très élevée (surcharge par rapport à la charge nominale) et à la même vitesse, pendant un nombre prédéfini de kilomètres. Si le pneumatique arrive au bout du test sans destruction, une note maximale de 100 lui est attribuée ; dans le cas contraire, sa note est réduite au prorata du kilométrage parcouru avant destruction.

B) Endurance en roulage haute vitesse :

L'endurance en roulage à haute vitesse est appréciée en soumettant chaque enveloppe à une montée en vitesse progressive, selon des paliers déterminés, jusqu'à une vitesse limite préalablement fixée (supérieure à 300 km/h). Si le pneumatique arrive au bout du test sans destruction, une note maximale de 100 lui est attribuée ; dans le cas contraire, sa note est réduite au prorata du kilométrage parcouru avant destruction.

C) Montabilité (aptitude à l'ovalisation) :

Un test de montabilité est pratiqué dans lequel on écrase progressivement, radialement, l'enveloppe de pneumatique (non montée sur sa jante) pour apprécier son aptitude à l'ovalisation, c'est-à-dire sa déformabilité dans son propre plan.

Le test est volontairement conduit sous des conditions de déformation très sévères, jusqu'à obtenir un flambage de la structure du bourrelet et l'apparition d'au moins une déformation permanente (bosse visible à l'oeil nu) sur l'extérieur de la zone basse du pneumatique. Plus le seuil critique d'écrasement, en d'autres termes la flèche supportée sont élevés, meilleure est la déformabilité et la résistance en flexion de la zone basse du pneumatique. Une valeur relative égale à 100 est retenue pour le pneumatique témoin servant de référence pour le test (ici, pneu P-I), une valeur supérieure indique une performance améliorée. L'ensemble des résultats obtenus à ces différents tests a été résumé dans le tableau 2 ci-après.

Tableau 2

| Pneumatique : | P-I | P-II | P-III | P-IV |
|---|---|---|---|---|
| Câble d'ancrage: | C-I | C-II | C-III | C-IV |
| Endurance roulage longue durée : | 100 | 100 | 100 | 100 |
| Endurance roulage haute vitesse : | 100 | 100 | 100 | 100 |
| Montabilité: | 100 | 150 | 104 | > 200 |

On constate tout d'abord que les pneumatiques P-II et P-IV conformes à l'invention montrent au moins la même endurance en roulage que les pneumatiques témoins (P-I et P-III).

Mais on observe surtout, de manière surprenante, un résultat très sensiblement amélioré en ce qui concerne la montabilité sur les pneumatiques de l'invention, comparativement aux pneumatiques témoins dont la structure d'ancrage utilise pourtant des câbles à élongation élevée, traités grand-allongement et donc nettement plus coûteux.

Le pneu P-II montre déjà une performance améliorée de 50%, tandis que le pneu P-IV dont la structure d'ancrage utilise le câble préférentiel C-IV de construction 4+9, montre de manière inattendue une déformabilité encore nettement améliorée, aucune déformation permanente n'ayant été observée, même sous écrasement maximal de l'enveloppe.

On constate en outre que les pneus de l'invention peuvent être plus facilement gauchis, c'est-à-dire que leur périmètre est plus aisément déformable, selon la direction axiale.

Ces résultats inattendus sont attribuables à la construction spécifique des câbles d'ancrage des pneumatiques de l'invention, en particulier à leurs pas d'assemblage très courts, dans les fourchettes de valeurs préconisées.

Les opérations de montage et démontage, notamment sur une roue monobloc, des pneumatiques selon l'invention peuvent ainsi être réalisées de manière plus simple et plus rapide. Il est désormais possible d'utiliser des gommes d'ancrage à dureté élevée, favorables au comportement routier, sans passer nécessairement par l'emploi de câbles traités grand allongement. Des tests complémentaires de roulage ont bien par ailleurs démontré que les pneus P-II et P-IV conformes à l'invention offraient un comportement routier amélioré, comparativement à des pneus conformes à l'invention utilisant les mêmes câbles d'ancrage à pas courts mais une gomme d'ancrage à rigidité moindre (module E10 de l'ordre de 15 MPa environ).

**Revendications**

**1.** Pneumatique comportant un sommet surmonté d'une bande de roulement, une armature de sommet, deux flancs (1) et deux bourrelets (2), une armature de carcasse (3) passant dans les deux flancs (2) et ancrée grâce à des moyens d'ancrage (5, 6a, 6b, 6c, 8) dans les deux bourrelets (2), lesdits moyens d'ancrage comportant, dans au moins un bourrelet (2), un alignement circonférentiel d'au moins un renfort d'ancrage (7) orienté circonférentiellement coopérant avec une composition de caoutchouc dite gomme d'ancrage (8), ledit renfort d'ancrage (7) étant un câble métallique à deux, formé de fils constitués majoritairement ou intégralement d'un matériau métallique, couches de construction M+N comportant une couche interne notée C1 de M fils de diamètre $d_1$ enroulés ensemble en hélice selon un pas $p_1$, cette couche C1 étant elle-même entourée d'une couche externe notée C2 de N fils de diamètre $d_2$ enroulés ensemble en hélice selon un pas $p_2$, ledit câble présentant en outre les caractéristiques suivantes, $d_1$, $d_2$, $p_1$ et $p_2$ étant exprimés en mm :

- $2 \leq M \leq 4$ ;
- $M+3 \leq N \leq M+7$ ;
- $0,25 < d_1 < 0,40$ ;
- $0,25 < d_2 < 0,40$ ;
- $3,5 < p_1 < 7 < p_2 < 14$.

**2.** Pneumatique selon la revendication 1, dans lequel les fils des couches C1 et C2 sont de diamètre identique ($d_1 = d_2$).

**3.** Pneumatique selon les revendications 1 ou 2, dans lequel les couches C1 et C2 du câble à couches sont enroulées dans le même sens de torsion.

**4.** Pneumatique selon l'une quelconque des revendications 1 à 3, dans lequel la couche externe C2 comporte de 6 à 10 fils.

**5.** Pneumatique selon la revendication 4, dans lequel la couche externe C2 comporte de 7 à 9 fils.

**6.** Pneumatique selon l'une quelconque des revendications 1 à 5, dans lequel la couche externe C2 est une couche insaturée, c'est-à-dire qu'il existe suffisamment de place dans la couche externe C2 pour y ajouter au moins un N+1 ème fil de diamètre $d_2$.

**7.** Pneumatique selon l'une quelconque dès revendications 1 à 6, dans lequel le câble à couches est choisi parmi ceux de construction 2+6, 2+7, 2+8, 3+7, 3+8, 3+9, 4+8, 4+9, et 4+10.

**8.** Pneumatique selon la revendication 7, dans lequel le câble à couches est choisi parmi ceux de constructions 2+7, 3+8 et 4+9.

**9.** Pneumatique selon la revendication 8, dans lequel le câble à couches a pour construction 4+9.

**10.** Pneumatique selon l'une quelconque des revendication 1 à 9, dans lequel le câble à couches présente les caractéristiques suivantes :

$$0{,}30 < d_1 < 0{,}40 \ ;$$

$$0{,}30 < d_2 < 0{,}40 \ ;$$

$$4{,}0 < p_1 < 7 \ \text{et} \ 8 < p_2 < 14 \ .$$

**11.** Pneumatique selon la revendication 10, dans lequel le câble à couches présente les caractéristiques suivantes :

$$4{,}5 \leq p_1 \leq 6{,}5 \ \text{ et } \ 8{,}5 \leq p_2 \leq 13{,}5 \ .$$

**12.** Pneumatique selon l'une quelconque des revendications 1 à 11, le métal du câble métallique étant de l'acier.

**13.** Pneumatique selon la revendication 12, l'acier étant un acier au carbone.

**14.** Pneumatique selon la revendication 13, l'acier au carbone ayant une teneur en carbone comprise entre 0,1% et 1,2%.

**15.** Pneumatique selon la revendication 14, l'acier au carbone ayant une teneur en carbone comprise entre 0,5% et 1,1%.

**16.** Pneumatique selon la revendication 15, l'acier au carbone ayant une teneur en carbone comprise entre 0,6% et 1,0%.

**17.** Pneumatique selon l'une quelconque des revendications 1 à 16, l'allongement total à la rupture (At) du câble étant supérieur à 2,5%.

**18.** Pneumatique selon la revendication 17, At étant supérieur à 3,0%.

**19.** Pneumatique selon la revendication 18, At étant supérieur à 3,5%.

**20.** Pneumatique selon l'une quelconque des revendication 1 à 19, l'allongement fonctionnel, structural et élastique, Af du câble étant supérieur à 4,0%.

**21.** Pneumatique selon la revendication 20, Af étant supérieur à 5,0%.

**22.** Pneumatique selon la revendication 21, Af étant supérieur à 6,0%.

**23.** Pneumatique selon l'une quelconque des revendications 1 à 22, dans lequel la gomme d'ancrage comporte au moins un élastomère diénique qui est choisi dans le groupe constitué par les polybutadiènes, le caoutchouc naturel, les polyisoprènes de synthèse, les copolymères de butadiène, les copolymères d'isoprène et les mélanges de ces élastomères.

**24.** Pneumatique selon le revendication 23, dans lequel l'élastomère diénique est choisi dans le groupe constitué par le caoutchouc naturel, les polyisoprènes de synthèse, les copolymères d'isoprène et les mélange de ces élastomères.

**25.** Pneumatique selon la revendication 24, dans lequel l'élastomère diénique est majoritairement du caoutchouc naturel.

**26.** Pneumatique selon les revendications 23 ou 24, dans lequel l'élastomère diénique est un mélange de caoutchouc naturel et d'élastomère diénique synthétique.

**27.** Pneumatique selon la revendication 26, dans lequel l'élastomère diénique synthétique et choisi dans le groupe constitué par les polybutadiènes, les copolymères de butadiène-styrène et les mélanges de ces élastomères.

**28.** Pneumatique selon l'une quelconque des revendications 1 à 27, dans lequel la gomme d'ancrage présente, à l'état vulcanisé, un module sécant en extension noté E10, sous 10% d'allongement, qui est supérieur à 20 MPa.

**29.** Pneumatique selon la revendication 28, dans lequel la gomme d'ancrage présente un module E10 supérieur à 30 MPa.

**30.** Pneumatique selon la revendication 29, dans lequel la gomme d'ancrage présente un module E10 compris entre 40 et 70 MPa.

**31.** Pneumatique selon l'une quelconque des revendications 1 à 31, dans lequel la gomme d'ancrage comporte une résine renforçante.

**32.** Pneumatique selon la revendication 31, la résine renforçante étant formée d'un accepteur de méthylène et d'un donneur de méthylène.

**Claims**

**1.** A tyre comprising a crown surmounted by a tread, a crown reinforcement, two sidewalls (1) and two beads (2), a carcass reinforcement (3) passing into the two sidewalls (2) and anchored by anchoring means (5n 6a, 6b, 6c, 8) in the two beads (2), said anchoring means comprising, in at least one bead (2), a circumferential alignment of at least one anchoring reinforcing member (7) oriented circumferentially and cooperating with a rubber composition referred to as 'anchoring rubber' (8), formed of wires made majoritarily or fully of a metallic material, said anchoring reinforcing member (7) being a metal cable having two layers of construction M+N comprising an inner layer C1 of M wires of diameter $d_1$ wound together in a helix at a pitch $p_1$, this layer C1 itself being surrounded by an outer layer C2 of N wires of diameter $d_2$ wound together in a helix at a pitch $p_2$, said cable furthermore having the following characteristics ($d_1$, $d_2$, $p_1$ and $p_2$ in mm):

- $2 \leq M \leq 4$
- $M+3 \leq N \leq M+7$
- $0.25 < d_1 < 0.40$;
- $0.25 < d_2 < 0.40$;
- $3.5 < p_1 < 7 < p_2 < 14$

**2.** A tyre according to Claim 1, in which the wires of the layers C1 and C2 are of identical diameter ($d_1 = d_2$).

**3.** A tyre according to Claims 1 or 2, in which the layers C 1 and C2 of the layered cable are wound in the same direction of twist.

**4.** A tyre according to any one of Claims 1 to 3, in which the outer layer C2 comprises from 6 to 10 wires.

**5.** A tyre according to Claim 4, in which the outer layer C2 comprises from 7 to 9 wires.

**6.** A tyre according to any one of Claims 1 to 5, in which the outer layer C2 is an unsaturated layer, that is to say that there is sufficient space in this outer layer C2 to add at least one (N+1)th wire of diameter $d_2$.

**7.** A tyre according to any one of Claims 1 to 6, in which the layered cable is selected from among those of constructions 2+6, 2+7, 2+8, 3+7, 3+8, 3+9, 4+8, 4+9 and 4+10.

**8.** A tyre according to Claim 7, in which the layered cable is selected from among those of constructions 2+7, 3+8 and 4+9.

**9.** A tyre according to Claim 8, in which the layered cable has the construction 4+9.

**10.** A tyre according to any one of Claims 1 to 9, in which the layered cable has the following characteristics:

$$0.30 < d_1 < 0.40;$$

$$0.30 < d_2 < 0.40;$$

$$4.0 < p_1 < 7 \text{ and } 8 < p_2 < 14.$$

**11.** A tyre according to Claim 10, in which the layered cable has the following characteristics:

$$4.5 \leq p_1 \leq 6.5 \text{ and } 8.5 \leq p_2 \leq 13.5.$$

**12.** A tyre according to any one of Claims 1 to 11, the metal of the metal cable being steel.

**13.** A tyre according to Claim 12, the steel being a carbon steel.

**14.** A tyre according to Claim 13, the carbon steel having a carbon content of between 0.1% and 1.2%.

**15.** A tyre according to Claim 14, the carbon steel having a carbon content of between 0.5% and 1.1%.

**16.** A tyre according to Claim 15, the carbon steel having a carbon content of between 0.6% and 1.0%.

**17.** A tyre according to any one of Claims 1 to 16, the total elongation at break (At) of the cable being greater than 2.5%.

**18.** A tyre according to Claim 17, At being greater than 3.0%.

**19.** A tyre according to Claim 18, At being greater than 3.5%.

**20.** A tyre according to any one of Claims 1 to 19, the operational elongation, structural and elastic, Af of the cable being greater than 4.0%.

**21.** A tyre according to Claim 20, Af being greater than 5.0%.

**22.** A tyre according to Claim 21, Af being greater than 6.0%.

23. A tyre according to any one of Claims 1 to 22, in which the anchoring rubber comprises at least one diene elastomer selected from the group consisting of polybutadienes, natural rubber, synthetic polyisoprenes, butadiene copolymers, isoprene copolymers and mixtures of these elastomers.

24. A tyre according to Claim 23, in which the diene rubber is selected from the group consisting of natural rubber, synthetic polyisoprenes, isoprene copolymers and mixtures of these elastomers.

25. A tyre according to Claim 24, in which the diene rubber is majoritarily natural rubber.

26. A tyre according to Claims 23 or 24, in which the diene rubber is a mixture of natural rubber and synthetic diene elastomer.

27. A tyre according to Claim 26, in which the synthetic diene elastomer is selected from the group consisting of polybutadienes, butadiene/styrene copolymers and mixtures of these elastomers.

28. A tyre according to any one of Claims 1 to 27, in which the anchoring rubber has, in the vulcanised state, a secant tensile modulus E10, at 10% elongation, which is greater than 20 MPa.

29. A tyre according to Claim 28, in which the anchoring rubber has a modulus E10 greater than 30 MPa.

30. A tyre according to Claim 29, in which the anchoring rubber has a modulus E10 of between 40 and 70 MPa.

31. A tyre according to any one of Claims 1 to 31, in which the anchoring rubber comprises a reinforcing resin.

32. A tyre according to Claim 31, the reinforcing resin being formed of a methylene acceptor and a methylene donor.


**Patentansprüche**

1. Reifen, umfassend: einen Zenith, der von einer Lauffläche bedeckt ist, eine Zenitarmierung, zwei Flanken (1) und zwei Wülste (2), und eine Karkassenarmierung (3), die durch die beiden Flanken (2) verläuft, und mit Hilfe von Verankerungsmitteln (5, 6a, 6b, 6c, 8) in den beiden Wülsten (2) verankert ist, wobei die Verankerungsmittel in mindestens einem Wulst (2) eine umlaufende Anordnung mindestens einer Verankerungsverstärkung (7) umfassen, die umlaufend ausgerichtet ist, in Kooperation mit einer Verankerungsgummi (8) genannten Kautschukzusammensetzung, die aus Fasern gebildet wird, die überwiegend oder vollständig aus einem metallischen Material bestehen, wobei die Verankerungsverstärkung (7) ein Metallkabel mit zwei Schichten der Konstruktion M+N ist, das eine innere Schicht, die mit C1 bezeichnet wird, aus M Fasern mit dem Durchmesser $d_1$ umfasst, die zusammen gemäß einem Gang $p_1$ schraubenförmig gewunden sind, wobei diese Schicht C1 ihrerseits von einer äußeren Schicht, die mit C2 bezeichnet wird, aus N Fasern mit dem Durchmesser $d_2$ umgeben ist, die zusammen gemäß einem Gang $p_2$ schraubenförmig gewunden sind, wobei das Kabel ferner die folgenden Merkmale aufweist ($d_1$, $d_2$, $p_1$ und $p_2$ in mm) :

- $2 \leq M \leq 4$;
- $M+3 \leq N \leq M+7$;
- $0,25 < d_1 < 0,40$;
- $0,25 < d_2 < 0,40$;
- $3, 5 < p_1 < 7 < p_2 < 14$.

2. Reifen nach Anspruch 1, wobei die Fasern der Schichten $C_1$ und $C_2$ einen identischen Durchmesser haben ($d_1 = d_2$).

3. Reifen nach den Ansprüchen 1 oder 2, wobei die Schichten C1 und C2 des Schichtenkabels in der gleichen Verdrillungsrichtung schraubenförmig gewunden sind.

4. Reifen nach einem der Ansprüche 1 bis 3, wobei die äußere Schicht C2 6 bis 10 Fasern umfasst.

5. Reifen nach Anspruch 4, wobei die äußere Schicht C2 7 bis 9 Fasern umfasst.

6. Reifen nach einem der Ansprüche 1 bis 5, wobei die äußere Schicht C2 eine ungesättigte Schicht ist, das heißt, in der äußeren Schicht C2 ist ausreichend Platz vorhanden, um dort mindestens eine N+1. Faser mit Durchmesser

$d_2$ hinzuzufügen.

**7.** Reifen nach einem der Ansprüche 1 bis 6, wobei das Schichtenkabel aus jenen mit den Konstruktionen 2+6, 2+7, 2+8, 3+7, 3+8, 3+9, 4+8, 4+9 und 4+10 ausgewählt ist.

**8.** Reifen nach Anspruch 7, wobei das Schichtenkabel aus jenen mit den Konstruktionen 2+7, 3+8 und 4+9 ausgewählt ist.

**9.** Reifen nach Anspruch 8, wobei das Schichtenkabel eine Konstruktion 4+9 hat.

**10.** Reifen nach einem der Ansprüche 1 bis 9, wobei das Schichtenkabel die folgenden Merkmale aufweist:

$$0,30 < d_1 < 0,40;$$

$$0,30 < d_2 < 0,40;$$

$$4,0 < p_1 < 7 \text{ und } 8 < p_2 < 14.$$

**11.** Reifen nach Anspruch 10, wobei das Schichtenkabel die folgenden Merkmale aufweist:

$$4,5 \leq p_1 \leq 6,5 \text{ und } 8,5 \leq p_2 \leq 13,5.$$

**12.** Reifen nach einem der Ansprüche 1 bis 11, wobei das Metall des Metallkabels aus Stahl ist.

**13.** Reifen nach Anspruch 12, wobei der Stahl ein Kohlenstoffstahl ist.

**14.** Reifen nach Anspruch 13, wobei der Kohlenstoffstahl einen Kohlenstoffgehalt im Bereich zwischen 0,1 % und 1,2 % hat.

**15.** Reifen nach Anspruch 14, wobei der Kohlenstoffstahl einen Kohlenstoffgehalt im Bereich zwischen 0,5 % und 1,1 % hat.

**16.** Reifen nach Anspruch 15, wobei der Kohlenstoffstahl einen Kohlenstoffgehalt im Bereich zwischen 0,6 % und 1,0 % hat.

**17.** Reifen nach einem der Ansprüche 1 bis 16, wobei die Gesamtdehnung bei Bruch (At) des Kabels größer als 2,5 % ist.

**18.** Reifen nach Anspruch 17, wobei At größer als 3,0 % ist.

**19.** Reifen nach Anspruch 18, wobei At größer als 3,5 % ist.

**20.** Reifen nach einem der Ansprüche 1 bis 19, wobei die funktionelle, strukturelle und elastische Dehnung Af des Kabels größer als 4,0% ist.

**21.** Kabel nach Anspruch 20, wobei Af größer als 5,0 % ist.

**22.** Kabel nach Anspruch 21, wobei Af größer als 6,0 % ist.

**23.** Reifen nach einem der Ansprüche 1 bis 22, wobei der Verankerungsgummi mindestens ein Dienelastomer umfasst, das aus der Gruppe bestehend aus Polybutadienen, Naturkautschuk, synthetischen Polyisoprenen, Butadien-Copolymeren, Isopren-Copolymeren und Gemischen dieser Elastomere ausgewählt ist.

**24.** Reifen nach Anspruch 23, wobei das Dienelastomer aus der Gruppe bestehend aus Naturkautschuk, synthetischen Polyisoprenen, Isopren-Copolymeren und Gemischen dieser Elastomere ausgewählt ist.

**25.** Reifen nach Anspruch 24, wobei das Dienelastomer überwiegend Naturkautschuk ist.

**26.** Reifen nach den Ansprüchen 23 oder 24, wobei das Dienelastomer ein Gemisch aus Naturkautschuk und synthetischem Dienelastomer ist.

**27.** Reifen nach Anspruch 26, wobei das synthetische Dienelastomer aus der Gruppe bestehend aus Polybutadienen, Butadien-Styrol-Copolymeren und Gemischen dieser Elastomere ausgewählt ist.

**28.** Reifen nach einem der Ansprüche 1 bis 27, wobei der Verankerungsgummi im vulkanisierten Zustand ein Sekantenmodul in Extension, als E10 bezeichnet, mit 10 % Dehnung aufweist, das größer als 20 MPa ist.

**29.** Reifen nach Anspruch 28, wobei der Verankerungsgummi ein Modul E10 größer als 30 MPa aufweist.

**30.** Reifen nach Anspruch 29, wobei der Verankerungsgummi ein Modul E10 im Bereich zwischen 40 und 70 MPa aufweist.

**31.** Reifen nach einem der Ansprüche 1 bis 31, wobei der Verankerungsgummi ein verstärkendes Harz umfasst.

**32.** Reifen nach Anspruch 31, wobei das verstärkende Harz aus einem Methylenakzeptor und einem Methylendonor gebildet ist.

Fig. 1

Fig. 2

## Fig. 3

## Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 582196 A
- EP 664231 A
- EP 664232 A
- EP 664233 A
- US 5660656 A
- WO 9854006 A
- WO 2004009380 A
- EP 751015 A
- US 5702548 A
- EP 1277600 A

- EP 0269036 A
- EP 648891 A
- WO 9841682 A
- EP 919406 A
- EP 243851 A
- US 4795523 A
- EP 264600 A
- US 4963207 A
- EP 242840 A
- US 4895692 A